# EUROPÄISCHE PATENTSCHRIFT

(11) **EP 4 098 981 B1**
(45) Veröffentlichungstag und Bekanntmachung des Hinweises auf die Patenterteilung: **24.09.2025**
(21) Anmeldenummer: 22176529.0
(22) Anmeldetag: 31.05.2022
(51) Int. Cl.: G01F 15/02, G01F 1/00, G01F 1/84, G01F 25/10

(54) **VERFAHREN ZUM BETREIBEN EINES DURCHFLUSSMESSGERÄTES UND DURCHFLUSSMESSGERÄT**
FLOW METER AND METHOD FOR OPERATING A FLOW METER
PROCÉDÉ PERMETTANT DE FAIRE FONCTIONNER UN DÉBITMÈTRE ET DÉBITMÈTRE

(30) Priorität: 02.06.2021 DE 102021114321
(43) Veröffentlichungstag der Anmeldung: 07.12.2022
(73) Patentinhaber: Krohne AG, 4019 Basel (CH)
(72) Erfinder: den Haan, Arthur, 2311 VH Leiden (NL)
(74) Vertreter: Gesthuysen Patentanwälte

(56) Entgegenhaltungen:
- JP-A- 2007 163 203
- US-A- 5 228 327
- US-A1- 2020 249 063
- US-B2- 7 337 084

## Beschreibung

Die Erfindung betrifft Verfahren zum Betreiben eines Durchflussmessgerätes, wobei das Durchflussmessgerät einen Sensor zur Erfassung einer den Durchfluss angebenden Messgröße aufweist, wobei der Sensor die Messgröße in ein Sensorsignal umformt, und wobei das Durchflussmessgerät eine Steuer- und Auswerteeinheit aufweist, wobei die Steuer- und Auswerteeinheit aus dem Sensorsignal einen Durchflussmesswert für den Durchfluss bestimmt und einen den Durchflussmesswert repräsentierenden Ausgangswert ausgibt. Zudem betrifft die Erfindung ein entsprechendes Durchflussmessgerät.

Für die vorliegende Erfindung kommt es nicht auf das der Durchflussmessung zugrunde liegende Messprinzip an, die Erfindung kann also beispielsweise bei Coriolis-Massedurchflussmessgeräten, magnetisch-induktiven Durchflussmessgeräten, Ultraschalldurchflussmessgeräten, oder anderen Durchflussmessgeräten zum Einsatz kommen. Den verschiedenen Durchflussmessgeräten ist gemein, dass ein Sensor eine den Durchfluss angebende Messgröße erfasst - wie beispielsweise bei der magnetisch-induktiven Durchflussmessung die aufgrund der Ladungstrennung in einem Magnetfeld im strömenden Medium induzierte Messspannung, die zwischen zwei Elektroden abgegriffen wird - und die Messgröße in eine Sensorsignal umformt. In der Steuer- und Auswerteeinheit wird aus dem Sensorsignal ein Durchflussmesswert bestimmt und anschließend ein den Durchflussmesswert repräsentierender Ausgangswert ausgegeben. Das Ausgeben des Ausgangswertes kann hier ganz unterschiedlich erfolgen. Beispielsweise kann der Ausgangswert für einen Benutzer sichtbar angezeigt werden, ebenso ist es möglich, dass der Ausgangswert lediglich in der Steuer- und Auswerteeinheit abgelegt wird und beispielsweise auf Anfrage abrufbar ist.

Um eine zuverlässige Durchflussmessung durchführen zu können - unabhängig von der Art der Durchflussmessung - muss zumindest eine Mindestdurchflussmenge geben sein. Insbesondere bei besonders niedrigen Durchflussmengen kann es aufgrund von auftretendem Hintergrundrauschen - beispielsweise durch Pumpen oder ähnlichem - zu fehlerhaften Messwerten kommen. Insbesondere das Messen eines Nulldurchflusses erweist sich in der Praxis als schwierig, da auftretendes Hintergrundrauschen fälschlicherweise als Messsignal gewertet wird.

Aus dem Stand der Technik ist es bekannt, einen unteren Niedrigdurchflussgrenzwert zu definieren, der eine Untergrenze für einen sinnvoll messbaren Durchflussmesswert angibt. Liegt der Durchflussmesswert unterhalb des Niedrigdurchflussgrenzwertes, so wird der Ausgangswert auf Null gesetzt, sobald der gemessene Durchflussmesswert unterhalb des Niedrigdurchflussgrenzwertes liegt. Liegt der Durchflussmesswert oberhalb des Niedrigdurchflussgrenzwertes, so wird wieder ein Ausgangswert ausgegeben, der den Durchflussmesswert repräsentiert. Insbesondere in dem Messbereich um den Niedrigdurchflussgrenzwert herum kann dies jedoch zu einem sehr sprunghaften Verhalten führen.

Die Dokumente JP 2007 163203 A und US 2020/249063 A1 zeigen Verfahren zum Betreiben eines Durchflussmessgerätes aus dem Stand der Technik.

Der Erfindung liegt daher die Aufgabe zugrunde, ein Verfahren zum Betreiben eines Durchflussmessgerätes anzugeben, mit dem insbesondere in Niedrigdurchflussbereichen eine zuverlässige Durchflussmessung ermöglicht ist. Zudem ist es Aufgabe der Erfindung, ein entsprechendes Durchflussmessgerät anzugeben.

Die Aufgabe ist bei dem erfindungsgemäßen Verfahren zum Betreiben eines Durchflussmessgerätes zunächst und im Wesentlichen dadurch gelöst, nämlich mit den Merkmalen des Kennzeichnungsteils des Patentanspruchs 1, dass die folgende Verfahrensschritte ausgeführt werden:
- Bestimmung von Durchflussmesswerten
- Bildung von geglätteten Durchflussmesswerten über jeweils eine Mehrzahl von Durchflussmesswerten
- Aktivieren einer Niedrigdurchflussabschaltung, wobei bei aktivierter Niedrigdurchflussabschaltung der Ausgangswert auf Null gesetzt wird, wenn beide der folgenden Bedingungen erfüllt sind:
   Der aktuelle geglättete Durchflussmesswert liegt unterhalb eines ersten vorgegebenen Grenzwertes
      und
   eine vorgegebene Anzahl Durchflussmesswerte ist mit deaktivierter Niedrigdurchflussabschaltung bestimmt worden oder eine vorgegebene Anzahl geglätteter Durchflussmesswerte ist mit deaktivierter Niedrigdurchflussabschaltung gebildet worden.

Bei dem erfindungsgemäßen Verfahren werden also zunächst Durchflussmesswerte bestimmt. Die Durchflussmesswerte werden hierbei bevorzugt zeitlich aufeinanderfolgend bestimmt. Weiter bevorzugt ist der zeitliche Abstand zweiter aufeinanderfolgender Durchflussmesswerte gleichbleibend. Alternativ kann der zeitliche Abstand zweiter aufeinanderfolgender Durchflussmesswerte variieren.

In einem weiteren Verfahrensschritt werden geglättete Durchflussmesswerte über eine Mehrzahl von Durchflussmesswerten gebildet. Die Bildung geglätteter Durchflussmesswerte kann auf ganz unterschiedliche Art und Weise realisiert werden. Beispielsweise kann eine Tiefpassfilterung vorgenommen werden oder eine andere Art der Filterung. Ebenfalls denkbar ist, dass der geglättete Durchflussmesswert durch die Bildung eines Mittelwertes gebildet wird. Die konkrete Anzahl der Durchflussmesswerte, über die ein geglätteter Durchflussmesswert gebildet wird, wird bevorzugt anhand der Vorgehensweise der Bildung des geglätteten Durchflussmesswertes ausgewählt.

Weiter zeichnet sich das erfindungsgemäße Verfahren dadurch aus, dass eine Niedrigdurchflussabschaltung aktiviert wird. Bei aktivierter Niedrigdurchflussabschaltung wird der Ausgangswert auf Null gesetzt. Gleichwohl werden weiterhin, also auch bei aktivierter Niedrigdurchflussabschaltung, Durchflussmesswerte bestimmt, die jedoch nur nicht ausgegeben werden. Erfindungsgemäß wird die Niedrigdurchflussabschaltung nur dann aktiviert, wenn beide der folgenden Bedingungen gleichzeitig erfüllt sind: Zum einen muss der aktuelle geglättete Durchflussmesswert unterhalb eines ersten vorgegebenen Grenzwertes liegen. Zum anderen muss eine vorgegebene Anzahl von Durchflussmesswerten mit deaktivierter Niedrigdurchflussabschaltung bestimmt worden sein oder alternativ muss eine vorgegebene Anzahl geglätteter Durchflussmesswerte mit deaktivierter Niedrigdurchflussabschaltung gebildet worden sein.

Erfindungsgemäß ist erkannt worden, dass eine Durchflussmessung bei niedrigen Durchflussmesswerten dadurch optimiert werden kann, dass nicht unmittelbar bei Unterschreiten eines Grenzwertes die Niedrigdurchflussabschaltung aktiviert wird, sondern dass die Niedrigdurchflussabschaltung erst dann aktiviert wird, wenn zumindest eine vorgegebene Anzahl von Durchflussmesswerten mit deaktivierter Niedrigdurchflussabschaltung bestimmt worden ist oder eine vorgegebene Anzahl von geglätteten Durchflussmesswerten gebildet worden ist. So wird vermieden, dass in dem Fall, in dem die Durchflussmesswerte um den Grenzwert herum schwanken, die Niedrigdurchflussabschaltung immer unmittelbar aktiviert und deaktiviert wird.

Insbesondere wird durch die erfindungsgemäß vorgegebenen Bedingungen, die beide erfüllt sein müssen, damit die Niedrigdurchflussabschaltung aktiviert wird, erreicht, dass das Ausgangssignal nach wie vor reagiert, wenn der Durchflusswert plötzlich auf einen sehr kleinen Durchflusswert sinkt, die Niedrigdurchflussabschaltung wird also nicht unmittelbar aktiviert.

Es ist ausgeführt worden, dass die Bildung des geglätteten Durchflussmesswertes durch Bildung eines Mittelwertes realisiert werden kann. Hierbei ist gemäß einer bevorzugten Ausführungsform des erfindungsgemäßen Verfahrens besonders vorteilhaft vorgesehen, dass ein gleitender Mittelwert gebildet wird. Bei der Bildung eines gleitenden Mittelwertes wird zunächst ein erster Mittelwert über ein Fenster mit einer bestimmten Anzahl von Durchflussmesswerten gebildet. Zur Bildung eines zweiten - folgenden - Mittelwertes wird das betrachtete Fenster verschoben, indem der erste Durchflussmesswert des Fensters gestrichen wird und der erste Durchflussmesswert nach dem Fenster aufgenommen wird; das Fenster wird also um einen Durchflussmesswert verschoben und ein neuer Mittelwert gebildet. Das Fenster kann auch um mehr als einen Durchflussmesswert verschoben werden.

In einer alternativen Ausführungsform wird der geglättete Durchflussmesswert durch einen exponentiell gleitenden Mittelwert gebildet. Weiter alternativ wird der geglättete Durchflussmesswert durch einen gewichteten gleitenden Mittelwert gebildet, oder durch einen arithmetischen oder harmonischen Mittelwert.

Eine besonders bevorzugte Ausführungsform des erfindungsgemäßen Verfahrens zeichnet sich dadurch aus, dass die vorgegebene Anzahl von Durchflussmesswerten oder geglätteten Durchflussmesswerten, die bei deaktivierter Niedrigdurchflussabschaltung bestimmt bzw. gebildet werden muss, bevor die Niedrigdurchflussabschaltung aktiviert wird, zahlenmäßig wenigstens der Mehrzahl der Messwerte pro geglättetem Durchflussmesswert entspricht.

Eine der beiden Bedingungen, die erfüllt sein muss, damit die Niedrigdurchflussabschaltung aktiviert wird, ist, dass der aktuelle geglättete Durchflussmesswert unterhalb eines ersten vorgegebenen Grenzwertes liegt. Der aktuelle geglättete Durchflussmesswert ist hierbei der zeitlich zuletzt gebildete geglättete Durchflussmesswert. In einer besonders bevorzugten Variante wird der erste vorgegebene Grenzwert gebildet durch einen Niedrigdurchflussgrenzwert minus einem ersten Toleranzwert.

Der Niedrigdurchflussgrenzwert kann auf einen beliebigen Wert gesetzt werden. Besonders bevorzugt orientiert sich der Niedrigdurchflussgrenzwert jedoch an der Standardabweichung der geglätteten Durchflussmesswerte und entspricht in einer ganz besonders bevorzugten Variante dreimal der Standardabweichung der geglätteten Durchflussmesswerte.

Besonders bevorzugt wird der erste Toleranzwert auf einen Wert gesetzt, der größer ist als die Standardabweichung des geglätteten Durchflussmesswertes.

Bisher ist beschrieben worden, welche Bedingungen erfüllt sein müssen, damit die Niedrigdurchflussabschaltung aktiviert wird, sodass der Ausgangswert auf Null gesetzt wird. Die Erfindung enthält jedoch ebenfalls eine Lehre für die Deaktivierung der Niedrigdurchflussabschaltung. Die Lehre für die Deaktivierung der Niedrigdurchflussabschaltung ist eine eigenständige Lehre der vorliegenden Patentanmeldung, die jedoch auch im Zusammenhang mit der zuvor beschriebenen Lehre anwendbar ist. Bei deaktivierter Niedrigdurchflussabschaltung wird ein Ausgangswert ausgegeben, der den tatsächlichen Durchflussmesswert widerspiegelt.

Gemäß einer bevorzugten erfindungsgemäßen Lehre eines Verfahrens zum Betreiben eines Durchflussmessgerätes, das einen Sensor zur Erfassung einer den Durchfluss angebenden Messgröße aufweist, wobei der Sensor die Messgröße in ein Sensorsignal umformt, und das eine Steuer- und Auswerteeinheit aufweist, wobei die Steuer- und Auswerteeinheit aus dem Sensorsignal einen Durchflussmesswert für den Durchfluss bestimmt und einen den Durchflussmesswert repräsentierenden Ausgangswert ausgibt, wobei eine Niedrigdurchflussabschaltung (LFC) aktiviert ist, wobei bei aktivierter Niedrigdurchflussabschaltung (LFC) der Ausgangswert (a) auf Null gesetzt wird werden die folgenden Verfahrensschritte durchgeführt:
- Bestimmung von Durchflussmesswerten
- Bildung von geglätteten Durchflussmesswerten über jeweils eine Mehrzahl von Durchflussmesswerten
- Deaktivierung der Niedrigdurchflussabschaltung, wobei bei deaktivierter Niedrigdurchflussabschaltung ein dem tatsächlichen Durchflussmesswert entsprechender Ausgangswert ausgegeben wird, wenn eine der beiden folgenden Bedingungen erfüllt ist:
   Der geglättete Durchflussmesswert liegt oberhalb eines zweiten vorgegebenen Grenzwertes, oder
   ein aktuell bestimmter Durchflussmesswert liegt oberhalb eines dritten vorgegebenen Grenzwertes.

Erfindungsgemäß ist erkannt worden, dass ein sprunghaftes Verhalten in der Aktivierung und Deaktivierung der Niedrigdurchflussabschaltung verhindert wird, wenn die Niedrigdurchflussabschaltung dann deaktiviert wird, wenn eine der beiden oben angeführten Bedingungen erfüllt ist. Im Gegensatz zu der Aktivierung der Niedrigdurchflussabschaltung, bei der zwei Bedingungen gleichzeitig erfüllt sein müssen, muss für die Deaktivierung der Niedrigdurchflussabschaltung nur eine einzige der beiden Bedingungen erfüllt sein.

Die erste Bedingung ermöglicht eine Deaktivierung der Niedrigdurchflussabschaltung auch bei verhältnismäßig geringen Durchflussmengen, sofern der geglättete Durchflussmesswert, der über eine Mehrzahl bestimmter Durchflussmesswerte gebildet wird, oberhalb des zweiten Grenzwertes liegt. Besonders bevorzugt wird der zweite vorgegebene Grenzwert gebildet aus dem Niedrigdurchflussgrenzwert plus dem ersten Toleranzwert.

Die zweite Bedingung, nämlich die Deaktivierung der Niedrigdurchflussabschaltung, wenn ein aktuell bestimmter Durchflussmesswert oberhalb eines dritten vorgegebenen Grenzwertes liegt, ermöglicht eine schnelle Reaktion auf einen schnellen, insbesondere starken Durchflussanstieg.

Bevorzugt wird der dritte vorgegebene Grenzwert gebildet aus dem Niedrigdurchflussgrenzwert plus einem zweiten Toleranzwert, wobei weiter bevorzugt der zweite Toleranzwert größer ist als der erste Toleranzwert. Besonders bevorzugt wird der zweite Toleranzwert auf einen Wert gesetzt, der größer ist als die Standardabweichung der aktuell bestimmten Durchflussmesswerte.

Um die Genauigkeit einer Durchflussmessung weiter zu erhöhen, ist es vorteilhaft, in regelmäßigen Abständen eine Nullpunktskorrektur des Durchflussmessgerätes vorzunehmen. Eine besonders bevorzugte Variante des erfindungsgemäßen Verfahrens zeichnet sich dadurch aus, dass in einem Korrekturschritt bei aktivierter Niedrigdurchflussabschaltung eine Nullpunktskorrektur des Durchflussmessgerätes durchgeführt wird. Durch die erfindungsgemäße Variante des Verfahrens ist es möglich, die Nullpunktskorrektur des Durchflussmessgerätes im laufenden Betrieb, also während einer Durchflussmessung, durchzuführen. Hierdurch ergibt sich neben einem zeitlichen Vorteil, da keine "zusätzliche" Nullpunktskorrektur durchgeführt werden muss, der Vorteil, dass nachfolgende Messungen mit deaktivierter Niedrigdurchflussabschaltung mit aktuell durchgeführter Nullpunktskorrektur durchgeführt werden. Hierdurch wird die Messgenauigkeit weiter erhöht, da das Durchflussmessgerät auf die aktuell vorherrschenden Bedingungen eingestellt ist. Eine Veränderung des Nullpunkts, der von verschiedenen Prozessbedingungen, wie beispielsweise der Mediumtemperatur, der Umgebungstemperatur, der Viskosität des Mediums oder den vorherrschenden Druckverhältnissen, abhängig ist, wird durch das erfindungsgemäße Verfahren also zeitnah korrigiert.

Die Nullpunktskorrektur wird bevorzugt dann durchgeführt, wenn der von der Steuer- und Auswerteeinheit bestimmte Durchflussmesswert für den Durchfluss Null ist, also dann, wenn tatsächlich kein Durchfluss vorliegt. Besonders bevorzugt wird vor der Durchführung der Nullpunktskorrektur demnach überprüft, dass der Durchflussmesswert Null ist. Weiter bevorzugt wird während der Durchführung der Nullpunktskorrektur weiter überprüft, ob der Durchflussmesswert einen Wert ungleich Null annimmt. Ist das der Fall, wird bevorzugt die Nullpunktskorrektur unmittelbar beendet.

Die Nullpunktskorrektur kann hierbei insbesondere auf aus dem Stand der Technik bekannte Art und Weise durchgeführt werden.

Besonders vorteilhaft wird nach Aktivierung der Niedrigdurchflussabschaltung eine Wartezeit t gewartet, bevor die Nullpunktskorrektur durchgeführt wird. Weiter bevorzugt wird der Nullpunkt aus einer Mehrzahl von Messwerten bestimmt, die mit aktivierter Niedrigdurchflussabschaltung aufgenommen werden, beispielsweise durch Bildung eines Mittelwertes dieser Messwerte.

Wie weiter oben ausgeführt, wird die Niedrigdurchflussabschaltung deaktiviert, sobald eine der beiden Voraussetzungen erfüllt ist, also sobald entweder der gemittelte Durchflussmesswert oberhalb des zweiten Grenzwertes liegt oder sobald der aktuell bestimmte Durchflussmesswert oberhalb des dritten Grenzwertes liegt. Die Deaktivierung der Niedrigdurchflussabschaltung unterliegt hierbei einer gewissen Reaktionszeit, die abhängig ist von dem gemessenen Durchfluss und den festgelegten Grenzwerten.

Während der Reaktionszeit ist der Ausgangswert noch auf Null gesetzt, obwohl bereits "messbarer" Durchfluss vorliegt. Demnach wird die während der Reaktionszeit messbare Durchflussmenge nicht als Ausgangswert ausgegeben. Eine besonders bevorzugte Variante des erfindungsgemäßen Verfahrens ist durch folgende zusätzliche Verfahrensschritte gekennzeichnet:
- Bestimmung oder Abrufung der Reaktionszeit der Niedrigdurchflussabschaltung
- Bestimmung des Durchflusses nach Deaktivierung der Niedrigdurchflussabschaltung über den Zeitraum der Reaktionszeit der Niedrigdurchflussabschaltung
- Aufaddieren des während der Reaktionszeit bestimmten Durchflusses auf den Ausgangswert.

Erfindungsgemäß ist also vorgesehen, dass der nicht ausgegebene, jedoch messbare Durchfluss während der Reaktionszeit gemessen wird und dann - wenn der tatsächliche Durchfluss nach Ablauf der Reaktionszeit bei deaktivierter Niedrigdurchflussabschaltung ausgegeben wird - auf den ausgegebenen Durchfluss aufaddiert wird. Die erfindungsgemäße Variante weist den Vorteil auf, dass keine Durchflussmenge bei der Bestimmung des Durchflusses unberücksichtigt bleibt. Erfindungsgemäß wird also die Menge an Durchfluss bestimmt, die durch die Trägheit der Deaktivierung der Niedrigdurchflussabschaltung verloren geht, also die während der Reaktionszeit fließt.

In einer besonders bevorzugten Variante wird der während der Reaktionszeit bestimmte Durchfluss in mehrere Durchflussteilmengen unterteilt und auf mehrere Ausgangswerte aufgeteilt aufaddiert. Es wird also nicht der gesamte Durchfluss auf einen einzigen Ausgangswert aufaddiert, sondern auf mehrere Ausgangswerte verteilt aufaddiert.

In besonders bevorzugten Varianten sind Reaktionszeiten für verschiedene Durchflussmengen sowie verschiedene Grenzwerte in einer Auswerteeinheit eines Durchflussmessgerätes abgelegt oder von einer Auswerteeinheit abrufbar.

Neben dem Verfahren zum Betreiben eines Durchflussmessgerätes betrifft die Erfindung ebenfalls ein Durchflussmessgerät zur Bestimmung eines Durchflusses eines Mediums. Das Durchflussmessgerät weist einen Sensor zur Erfassung einer den Durchfluss angebenden Messgröße auf, wobei der Sensor die Messgröße in ein Sensorsignal umformt. Zudem weist das Durchflussmessgerät eine Steuer- und Auswerteeinheit auf, die aus dem Sensorsignal einen Durchflussmesswert für den Durchfluss bestimmt und einen den Durchflussmesswert repräsentierenden Ausgangswert ausgibt.

Bei dem erfindungsgemäßen Durchflussmessgerät ist die der Erfindung zugrunde liegende Aufgabe dadurch gelöst, dass die Steuer- und Auswerteeinheit derart ausgestaltet ist, dass sie im Betriebszustand des Durchflussmessgerätes die folgenden Verfahrensschritte ausführt:
- Bestimmung von Durchflussmesswerten
- Bildung von geglätteten Durchflussmesswerten über jeweils eine Mehrzahl von Durchflussmesswerten
- Aktivieren einer Niedrigdurchflussabschaltung, wobei bei aktivierter Niedrigdurchflussabschaltung der Ausgangswert auf Null gesetzt wird, wenn beide der folgenden Bedingungen erfüllt sind:
   Der aktuelle geglättete Durchflussmesswert liegt unterhalb eines ersten vorgegebenen Grenzwertes
      und
   eine vorgegebene Anzahl Durchflussmesswerte ist mit deaktivierter Niedrigdurchflussabschaltung bestimmt worden oder eine vorgegebene Anzahl geglätteter Durchflussmesswerte ist mit deaktivierter Niedrigdurchflussabschaltung gebildet worden.

Gemäß besonders bevorzugten Ausgestaltungen des erfindungsgemäßen Durchflussmessgerätes ist die Steuer- und Auswerteeinheit ferner derart ausgestaltet, dass sie im Betriebszustand des Durchflussmessgerätes wenigstens einen weiteren im Zusammenhang mit dem erfindungsgemäßen Verfahren beschriebenen Verfahrensschritt ausführt.

Sämtliche in Bezug auf das erfindungsgemäße Verfahren gemachten Ausführungen in Bezug auf erfindungsgemäße Ausführungsformen des Verfahrens mit ihren Vorteilen gelten entsprechend auch für das erfindungsgemäße Durchflussmessgerät und umgekehrt.

Im Einzelnen gibt es nun eine Vielzahl von Möglichkeiten, das erfindungsgemäße Verfahren zum Betreiben eines Durchflussmessgerätes und das erfindungsgemäße Durchflussmessgerät auszugestalten und weiterzubilden. Hierzu wird verwiesen auf die den nebengeordneten Patentansprüchen nachgeordneten Patentansprüche sowie auf die Beschreibung bevorzugter Ausführungsbeispiele in Verbindung mit der Zeichnung. In der Zeichnung zeigen
- Fig. 1: ein Blockdiagramm einer ersten Ausführungsform eines Verfahrens zum Betreiben eines Durchflussmessgerätes,
- Fig. 2: ein Blockdiagramm einer zweiten Ausführungsform eines Verfahrens zum Betreiben eines Durchflussmessgerätes,
- Fig. 3: ein Flussdiagramm eines Verfahrens zum Betreiben eines Durchflussmessgerätes,
- Fig. 4: ein Blockdiagramm einer dritten Ausführungsform eines Verfahrens zum Betreiben eines Durchflussmessgerätes,
- Fig. 5: ein Flussdiagramm eines zweiten Verfahrens zum Betreiben eines Durchflussmessgerätes,
- Fig. 6: eine beispielhafte graphische Darstellung des zeitlichen Verlaufs einzelner Werte,
- Fig. 7: eine schematische Darstellung eines Durchflussmessgerätes mit einer Steuer- und Auswerteeinheit, die die zuvor dargestellten Varianten des Verfahrens ausführen kann und
- Fig. 8: ein Blockdiagramm einer dritten Ausführungsform eines Verfahrens zum Betreiben eines Durchflussmessgerätes.

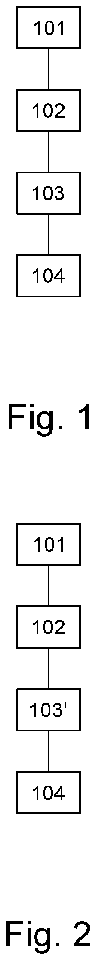

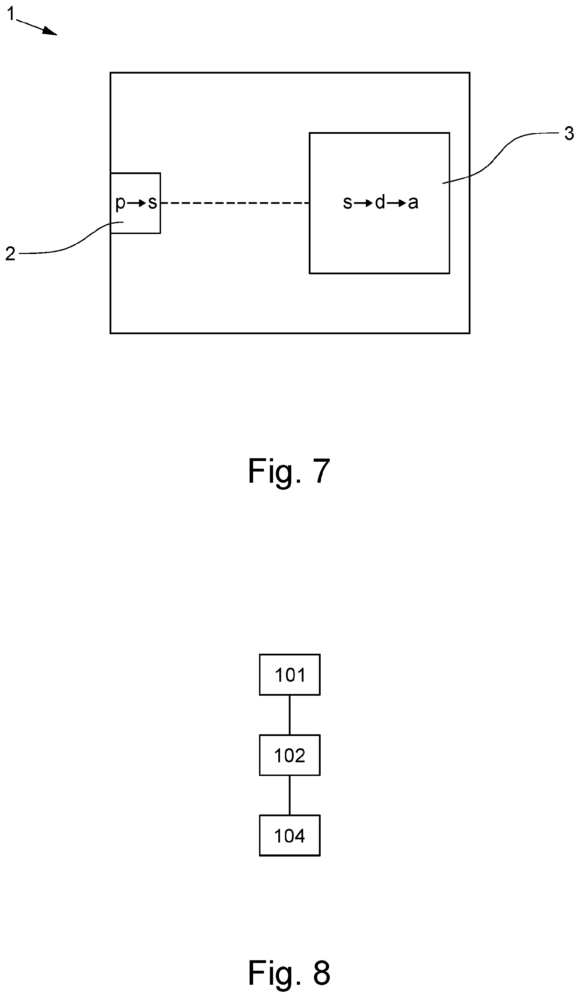

Fig. 1 zeigt ein Blockdiagramm eines Verfahrens 100 zum Betreiben eines Durchflussmessgerätes 1. Das Durchflussmessgerät 1 ist in Fig. 7 dargestellt und weist einen Sensor 2 auf, der eine Messgröße p erfasst und die Messgröße p in ein Sensorsignal s umformt. Das Sensorsignal s wird an eine Steuer- und Auswerteeinheit 3 geleitet, wobei die Steuer- und Auswerteeinheit 3 aus dem Sensorsignal s einen Durchflussmesswert d für den Durchfluss des Mediums bestimmt. Zudem gibt die Steuer- und Auswerteeinheit dann einen den Durchflussmesswert d repräsentierenden Ausgangswert a aus. Die Steuer- und Auswerteeinheit 3 des dargestellten Durchflussmessgerätes 1 ist ferner so ausgestaltet, dass sie im Betriebszustand des Durchflussmessgerätes 1 die im Weiteren beschriebenen Varianten des Verfahrens 100 ausführen kann.

Bei der in Fig. 1 dargestellten Variante des Verfahrens 100 werden in einem Schritt 101 Durchflussmesswerte d bestimmt. Die Bestimmung der Durchflussmesswerte erfolgt im dargestellten Beispiel zeitkontinuierlich, wobei die Zeit zwischen zwei Durchflussmesswerten hier konstant ist. In einem weiteren Schritt 102 werden geglättete Durchflussmesswerte d_{g} über jeweils eine Mehrzahl m von Durchflussmesswerten d gebildet. Vorliegend wird der geglättete Durchflussmesswert d_{g} durch die Bildung eines einfachen gleitenden Mittelwertes gebildet. In einem weiteren Verfahrensschritt 103 wird eine Niedrigdurchflussabschaltung LFC aktiviert, wenn der aktuelle geglättete Durchflussmesswert d_{g,akt} unterhalb eines ersten vorgegebenen Grenzwertes g₁ liegt und eine vorgegebene Anzahl n von Durchflussmesswerten d mit deaktivierter Niedrigdurchflussabschaltung LFC bestimmt worden ist. Im dargestellten Ausführungsbeispiel entspricht die Anzahl n der Durchflussmesswerte d, die mit deaktivierter Niedrigdurchflussabschaltung LFC bestimmt worden ist, zahlenmäßig der Mehrzahl m der Durchflussmesswerte d, über die der geglättete Durchflussmesswert d_{g} gebildet worden ist. Der erste Grenzwert g₁ ergibt sich in dem Ausführungsbeispiel aus einem Niedrigdurchflussgrenzwert gₙ minus einem ersten Toleranzwert t₁. Bei aktivierter Niedrigdurchflussabschaltung LFC werden nach wie vor Durchflussmesswerte d bestimmt, jedoch wird der Ausgangswert a auf Null gesetzt. In einem weiteren Schritt 104 wird die Niedrigdurchflussabschaltung LFC deaktiviert, wenn der aktuelle geglättete Durchflussmesswert d_{g,akt} oberhalb eines zweiten vorgegebenen Grenzwertes g₂ liegt, oder wenn der aktuelle Durchflussmesswert dₐₖₜ oberhalb eines dritten vorgegebenen Grenzwertes g₃ liegt. Der zweite Grenzwert g₂ ergibt sich in dem Ausführungsbeispiel aus dem Niedrigdurchflussgrenzwert gₙ plus dem ersten Toleranzwert t₁. Der dritte Grenzwert g₃ hingegen ergibt sich in dem Ausführungsbeispiel aus dem Niedrigdurchflussgrenzwert gₙ plus einem zweiten Toleranzwert t₂. Der zweite Toleranzwert t₂ ist größer als der erste Toleranzwert t₁, sodass der dritte Grenzwert g₃ größer ist als der zweite Grenzwert g₂. Hier ist von den Absolutbeträgen der Grenzwerte bzw. Toleranzwerte die Rede. Der Betrag der entsprechenden Werte richtet sich nach der Richtung des Durchflusses des Mediums.

Fig. 2 zeigt ein Blockdiagramm einer weiteren Ausführungsform des Verfahrens 100. Das in Fig. 2 dargestellte Verfahren unterscheidet sich von dem in Fig. 1 dargestellten Verfahren dadurch, dass die Niedrigdurchflussabschaltung LFC in einem Schritt 103' aktiviert wird, wenn sowohl der aktuelle geglättete Durchflussmesswert d_{g,akt} unterhalb eines ersten vorgegebenen Grenzwertes g₁ liegt als auch eine vorgegebene Anzahl k geglätteter Durchflussmesswerte d_{g} mit deaktivierter Niedrigdurchflussabschaltung LFC bestimmt worden ist.

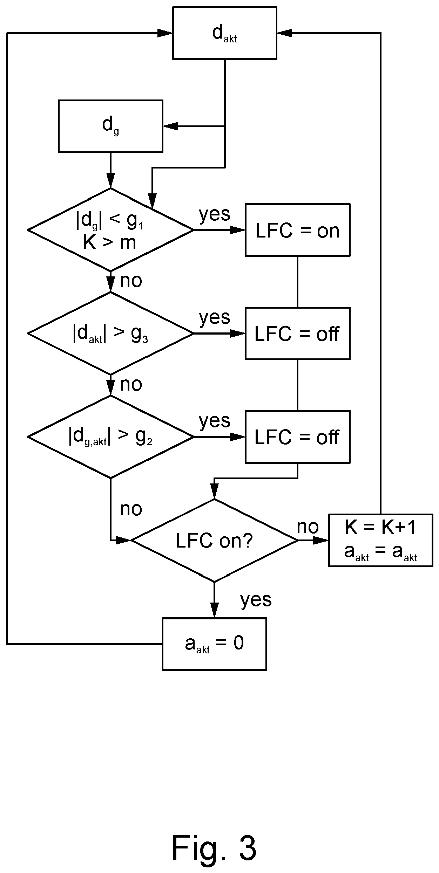

Fig. 3 zeigt ein Flussdiagramm eines Verfahrens 100 zum Betreiben eines Durchflussmessgerätes 1. Ein aktueller Durchflussmesswert dₐₖₜ wird bestimmt. Dann wird ein geglätteter Durchflussmesswert d_{g} gebildet, wobei der geglättete Durchflussmesswert d_{g} über die letzten m Durchflussmesswerte d gebildet wird. Liegt der geglättete Durchflussmesswert d_{g} unter einem ersten Grenzwert g₁ und ist zudem die Anzahl k der gebildeten geglätteten Durchflussmesswerte d_{g} mit deaktivierter Niedrigdurchflussabschaltung größer oder gleich der Anzahl m der Durchflussmesswerte d, über die der gleitende Durchflussmesswert d_{g} gebildet wird, so wird die Niedrigdurchflussabschaltung LFC aktiviert. Sind die beiden Bedingungen nicht erfüllt, besteht die Möglichkeit, dass die Niedrigdurchflussabschaltung LFC bereits aktiviert ist. Nun wird überprüft, ob der aktuell bestimmte Durchflussmesswert dₐₖₜ oberhalb eines dritten Grenzwertes g₃ liegt. Ist das der Fall, wird die Niedrigdurchflussabschaltung LFC deaktiviert. Ist dies nicht der Fall, wird weiter überprüft, ob der aktuelle geglättete Durchflussmesswert d_{g,akt} oberhalb eines zweiten Grenzwertes g₂ liegt. Ist das der Fall, wird die Niedrigdurchflussabschaltung LFC deaktiviert. Ferner wird dann überprüft, ob die Niedrigdurchflussabschaltung LFC aktiviert ist. Ist das der Fall, so wird der aktuelle Ausgangswert aₐₖₜ auf Null gesetzt. Ist die Niedrigdurchflussabschaltung LFC nicht aktiviert, so wird ein aktueller Ausgangswert aₐₖₜ ausgegeben, der den aktuellen Durchflussmesswert dₐₖₜ repräsentiert. Zudem wird die Anzahl der gebildeten geglätteten Durchflussmesswerte d_{g} von k auf k+1 gesetzt und im Anschluss ein neuer aktueller Durchflussmesswert dₐₖₜ bestimmt. Die Schritte wiederholen sich mit dem neuen aktuellen Durchflussmesswert.

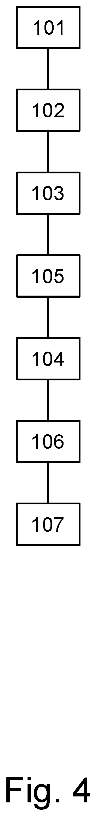

Fig. 4 zeigt ein Blockdiagramm eines weiteren Verfahrens zum Betreiben eines Durchflussmessgerätes. Bei dem in Fig. 4 dargestellten Verfahren werden die ersten drei Verfahrensschritte 101, 102 und 103 wie zu Fig. 2 erläutert ausgeführt. Bei aktivierter Niedrigdurchflussabschaltung LFC wird in einem Korrekturschritt 108 eine Nullpunktskorrektur des Durchflussmessgerätes durchgeführt. Hierdurch wird die Messgenauigkeit weiter erhöht. In einem weiteren Verfahrensschritt 105 wird die Reaktionszeit der Niedrigdurchflussabschaltung LFC bestimmt oder aus der Auswerteeinheit des Durchflussmessgerätes abgerufen. Bei diesem Verfahrensschritt ist die Niedrigdurchflussabschaltung nach wie vor aktiviert. Nach dem Deaktivieren der Niedrigdurchflussabschaltung LFC - Verfahrensschritt 104 - wird über den Zeitraum der Reaktionszeit der Durchfluss dₜ bestimmt - Verfahrensschritt 105. Dieser Durchfluss dₜ wird aufgrund der Trägheit der Deaktivierung der Niedrigdurchflussabschaltung LFC nicht als Ausgangswert a ausgegeben, da dieser noch auf Null gesetzt ist; der aktuelle Durchflussmesswert dₐₖₜ wird erst nach Ende der Reaktionszeit als aktueller Ausgangswert aₐₖₜ ausgegeben. Sobald der aktuelle Durchflussmesswert dₐₖₜ als aktueller Ausgangswert aₐₖₜ ausgegeben wird, wird in einem weiteren Verfahrensschritt 107 der Durchfluss dₜ auf den aktuellen Ausgangswert aₐₖₜ aufaddiert. In der dargestellten Ausführungsform des Verfahrens wird der Durchfluss dₜ in eine Mehrzahl t von Durchflussteilmengen Δd unterteilt. Diese Durchflussteilmengen Δd werden auf die nächsten t Ausgangswerte a aufaddiert. Pro Ausgangswert a wird eine Durchflussteilmenge Δd aufaddiert. In dem dargestellten Verfahren wird der Durchfluss dₜ in gleich große Durchflussteilmengen Δd unterteilt. Durch dieses Verfahren wird ein Durchflussverlust aufgrund der Trägheit der Niedrigdurchflussabschaltung LFC kompensiert, sodass die Messgenauigkeit der Durchflussmessung insgesamt erhöht wird.

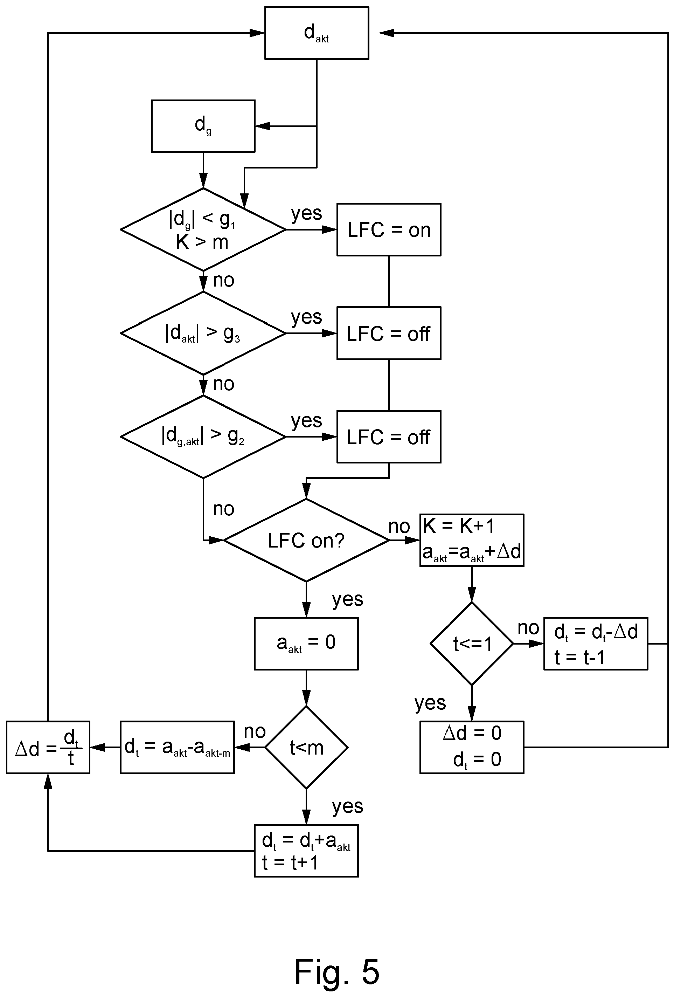

Fig. 5 zeigt ein Verlaufsdiagramm eines Verfahrens mit Durchflussverlustkompensierung. Das in Fig. 5 dargestellte Verfahren unterscheidet sich von dem in Fig. 3 dargestellten Verfahren entsprechend durch eine Durchflussverlustkompensierung. Der Durchflussverlust ist bedingt durch die Reaktionszeit der Niedrigdurchflussabschaltung LFC bei der Deaktivierung der Niedrigdurchflussabschaltung LFC. Um den Durchflussverlust auszugleichen, Um den in der Reaktionszeit der Deaktivierung der Niedrigdurchflussabschaltung LFC "verlorenen" Durchfluss dₜ zu kompensieren, wird in t Teilschritten der Durchfluss dₜ bestimmt, wobei hierzu die jeweils aktuellen Durchflussmesswerte aₐₖₜ über t Messungen aufaddiert werden. In dem dargestellten Ausführungsbeispiel ist t=m, die Anzahl der aufaddierten Durchflussmesswerte aₐₖₜ zur Bestimmung des Durchflusses dₜ entspricht also der Mehrzahl m der Durchflussmesswerte, über die zur Bestimmung des geglätteten Durchflussmesswertes d_{g} geglättet wird. Der Durchfluss dₜ wird in t Durchflussteilmengen Δd unterteilt. Bei deaktivierter Niedrigdurchflussabschaltung LFC wird auf den aktuellen Ausgangswert aₐₖₜ eine Durchflussteilmenge Δd aufaddiert. Dies erfolgt t mal, wobei bei jedem Aufaddieren der Wert t um eins reduziert wird (t=t-1), bis t ≤ 1. Sobald t ≤ 1, wird keine weitere Durchflussteilmenge Δd mehr auf den aktuellen Ausgangswert aufaddiert.

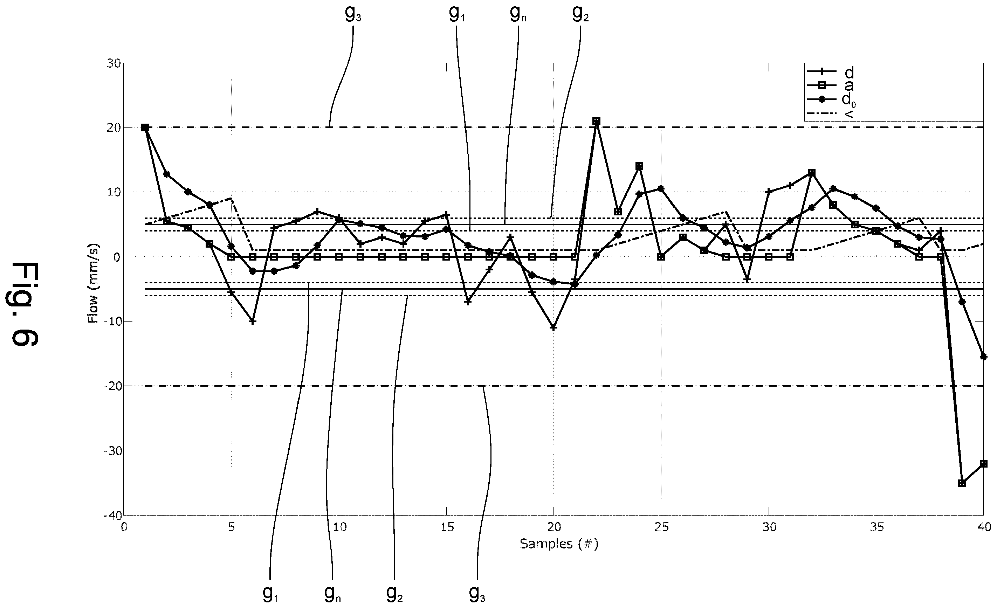

Fig. 6 zeigt beispielhaft eine graphische Darstellung des zeitlichen Verlaufs der einzelnen Werte, nämlich des Durchflussmesswertes d, des Ausgangswertes a und des geglätteten Durchflussmesswertes d_{g}. Hierbei ist der Durchfluss in Millimetern pro Sekunde (mm/s) gegen die Zeit in Sekunden (s) aufgetragen. Der Durchflussmesswert d ist durch die kreisförmigen Symbole dargestellt, der Ausgangswert a ist durch die quadratischen Symbole dargestellt und der geglättete Durchflussmesswert d_{g} ist durch die sternchenförmigen Symbole dargestellt. Vorliegend ist der geglättete Durchflussmesswert d_{g} durch die Bildung des einfachen gleitenden Mittelwertes gebildet worden, wobei über vier Durchflussmesswerte d geglättet worden ist.

Der Niedrigdurchflussgrenzwert gₙ liegt bei +/-5 mm/s. Der erste Toleranzwert t₁ beträgt 1 mm/s, sodass der erste Grenzwert g₁ bei +/-4 mm/s liegt und der zweite Grenzwert g₂ bei +/-6 mm/s liegt. Der zweite Toleranzwert t₂ beträgt 15 mm/s, sodass der dritte Grenzwert g₃ bei +/-20 mm/s liegt.

In den ersten vier dargestellten Sekunden liegen die jeweils aktuellen geglätteten Durchflussmesswerte d_{g} oberhalb des ersten Grenzwertes g₁. Demnach entspricht der jeweils aktuelle Ausgangswert a dem jeweils aktuellen Durchflussmesswert d. Bei der Zeit t=5s fällt der aktuelle geglättete Durchflussmesswert d_{g} auf einen Wert unterhalb des ersten Grenzwertes g₁. Zudem ist die Anzahl k der mit deaktivierter Niedrigdurchflussabschaltung LFC gebildeten geglättete Durchflussmesswerte d_{g} mit k=9 größer als die Mehrzahl m=4 der Durchflussmesswerte d, über die der geglättete Durchflussmesswert d_{g} gebildet wird. Demnach wird die Niedrigdurchflussabschaltung LFC aktiviert und der Ausgangswert a auf Null gesetzt. Wie der graphischen Darstellung entnommen werden kann, ist der Ausgangswert zwischen t=5s und t=21s auf Null gesetzt, da in der Zeit der geglättete Durchflussmesswert d_{g} auf einem Wert unterhalb des ersten Grenzwertes g₁ verbleibt. Bei t=22s steigt der aktuelle Durchflussmesswert d auf einen Wert oberhalb des dritten Grenzwertes g₃, sodass eine der Bedingungen für die Deaktivierung der Niedrigdurchflussabschaltung LFC erfüllt ist. Für die Deaktivierung ist es nur notwendig, dass eine der beiden möglichen Bedingungen erfüllt ist, sodass die Niedrigdurchflussabschaltung LFC deaktiviert wird. Der Ausgangswert a entspricht dann wieder dem Durchflussmesswert d. Bei der Zeit t=23s liegt der geglättete Durchflussmesswert d_{g} unterhalb des ersten Grenzwertes g₁, sodass eine der Bedingungen zur Aktivierung der Niedrigdurchflussabschaltung LFC erfüllt ist. Jedoch ist nur ein einziger geglätteter Durchflussmesswert d_{g} mit deaktivierter Niedrigdurchflussabschaltung LFC gebildet worden, nämlich bei t=22s, da bis t=21s die Niedrigdurchflussabschaltung LFC noch aktiviert war, sodass die zweite notwendige Bedingung zur Aktivierung der Niedrigdurchflussabschaltung LFC nicht erfüllt ist. Die Niedrigdurchflussabschaltung LFC wird somit nicht aktiviert, der Ausgangswert a entspricht dem Durchflussmesswert d. Erst bei einer Zeit von t=28s sind beide notwendige Bedingungen zur Aktivierung der Niedrigdurchflussabschaltung LFC erfüllt, sodass diese aktiviert wird und der Ausgangswert a auf Null gesetzt wird. Bei t=32s steigt der geglättete Durchflussmesswert d_{g} auf einen Wert oberhalb des zweiten Grenzwertes g₂. Dadurch ist eine der Bedingungen für die Deaktivierung der Niedrigdurchflussabschaltung LFC erfüllt und die Niedrigdurchflussabschaltung LFC wird deaktiviert. Bei t=37s sinkt der geglättete Durchflussmesswert d_{g} wieder auf einen Wert unterhalb des ersten Grenzwertes g₁. Zudem sind mehr als vier geglättete Durchflussmesswerte d_{g} mit deaktivierter Niedrigdurchflussabschaltung LFC gebildet worden, es ist also k>m, sodass die Niedrigdurchflussabschaltung LFC wieder aktiviert wird und der Ausgangswert auf Null gesetzt wird. Bei t=39s steigt der aktuelle Durchflussmesswert d (dem Betrag nach) auf einen Wert oberhalb des dritten Grenzwertes g₃, sodass hier wieder die Niedrigdurchflussabschaltung LFC deaktiviert wird.

Fig. 8 zeigt ein Blockdiagramm eines Verfahrens zum Betreiben eines Durchflussmessgerätes. Das Verfahren wird durchgeführt, wenn die Niedrigdurchflussabschaltung LFC aktiviert ist und betrifft die Deaktivierung der Niedrigdurchflussabschaltung LFC. In einem Verfahrensschritt werden Durchflussmesswerte d bestimmt. Ine inem weiteren Schritt 102 werden geglättete Durchflussmesswerte d_{g} über jeweils eine Mehrzahl m von Durchflussmesswerten d bestimmt. In einem Schritt 104' wird die Niedrigdurchflussabschaltung LFC deaktiviert, wenn der geglättete Durchflussmesswert d_{g} oberhalb eines zweiten vorgegebenen Grenzwertes g₂ liegt, oder wenn ein aktuell bestimmter Durchflussmesswert dₐₖₜ oberhalb eines dritten vorgegebenen Grenzwertes g₃ liegt. Bei deaktivierter Niedrigdurchflussabschaltung LFC wird ein dem tatsächlichen Durchflussmesswert d entsprechender Ausgangswert a ausgegeben.

### Bezugszeichen

- 1: Durchflussmessgerät
- 2: Sensor
- 3: Steuer- und Auswerteeinheit

- p: Messgröße
- s: Sensorsignal
- d: Durchflussmesswert
- a: Ausgangswert
- d_{g}: geglätteter Durchflussmesswert
- d_{g,akt}: aktueller geglätteter Durchflussmesswert
- gₙ: Niedrigdurchflussgrenzwert
- g₁: erster Grenzwert
- g₂: zweiter Grenzwert
- g₃: dritter Grenzwert
- t₁: erster Toleranzwert
- t₂: zweiter Toleranzwert
- LFC: Niedrigdurchflussabschaltung
- m: Mehrzahl Durchflussmesswerte, über die geglättet wird
- n: Anzahl Durchflussmesswerte mit deaktivierter LFC
- k: Anzahl geglätteter Durchflussmesswerte mit deaktivierter LFC
- 100: Verfahren
- 101: Bestimmung von Durchflussmesswerten
- 102: Bildung von geglätteten Durchflussmesswerten
- 103: Aktivieren einer LFC
- 103': Aktivieren einer LFC
- 104: Deaktivieren einer LFC
- 105: Bestimmung oder Abrufung der Reaktionszeit
- 106: Bestimmung des Durchflusses dₜ
- 107: Aufaddieren des Durchflusses dₜ auf den Ausgangswert a
- 108: Korrekturschritt

## Patentansprüche

1. Verfahren (100) zum Betreiben eines Durchflussmessgerätes (1), wobei das Durchflussmessgerät (1) einen Sensor (2) zur Erfassung einer den Durchfluss angebenden Messgröße (p) aufweist, wobei der Sensor (2) die Messgröße (p) in ein Sensorsignal (s) umformt, und wobei das Durchflussmessgerät (1) eine Steuer- und Auswerteeinheit (3) aufweist, wobei die Steuer- und Auswerteeinheit (3) aus dem Sensorsignal (s) einen Durchflussmesswert (d) für den Durchfluss bestimmt und einen den Durchflussmesswert (d) repräsentierenden Ausgangswert (a) ausgibt, mit den folgenden Prozessschritten:
• Bestimmung (101) von Durchflussmesswerten (d)
• Bildung (102) von geglätteten Durchflussmesswerten (d_{g}) über jeweils eine Mehrzahl (m) von Durchflussmesswerten (d), **gekennzeichnet durch** den folgenden Verfahrensschritt:
• Aktivieren einer Niedrigdurchflussabschaltung (LFC), wobei bei aktivierter Niedrigdurchflussabschaltung (LFC) der Ausgangswert (a) auf Null gesetzt wird, wenn beide der folgenden Bedingungen erfüllt sind:
Der aktuelle geglättete Durchflussmesswert (d_{g,akt}) liegt unterhalb eines ersten vorgegebenen Grenzwertes (g₁)
und
eine vorgegebene Anzahl (n) Durchflussmesswerte (d) ist mit deaktivierter Niedrigdurchflussabschaltung (LFC) bestimmt worden (103) oder eine vorgegebene Anzahl (k) geglätteter Durchflussmesswerte (d_{g}) ist mit deaktivierter Niedrigdurchflussabschaltung (LFC) gebildet worden (103').

2. Verfahren (100) nach Anspruch 1, **dadurch gekennzeichnet, dass** der geglättete Durchflussmesswert (d_{g}) durch die Bildung eines Mittelwertes gebildet wird, insbesondere wobei ein einfacher gleitender Mittelwert, ein exponentieller gleitender Mittelwert oder ein gewichteter gleitender Mittelwert gebildet wird oder ein arithmetischer oder harmonischer Mittelwert gebildet wird.

3. Verfahren (100) nach Anspruch 2, **dadurch gekennzeichnet, dass** die vorgegebene Anzahl (k) geglätteter Durchflussmesswerte (d_{g}) wenigstens der Mehrzahl (m) der Durchflussmesswerte (d) entspricht, über die pro geglättetem Durchflussmesswert (d_{g}) geglättet wird.

4. Verfahren (100) nach einem der Ansprüche 1 bis 3, **dadurch gekennzeichnet, dass** der erste vorgegebene Grenzwert (g₁) gebildet wird durch einen Niedrigdurchflussgrenzwert (gₙ) minus einem ersten Toleranzwert (t₁).

5. Verfahren (100) zum Betreiben eines Durchflussmessgerätes (1), wobei das Durchflussmessgerät (1) einen Sensor (2) zur Erfassung einer den Durchfluss angebenden Messgröße (p) aufweist, wobei der Sensor (2) die Messgröße (p) in ein Sensorsignal (s) umformt, und wobei das Durchflussmessgerät (1) eine Steuer- und Auswerteeinheit (3) aufweist, wobei die Steuer- und Auswerteeinheit (3) aus dem Sensorsignal (s) einen Durchflussmesswert (d) für den Durchfluss bestimmt und einen den Durchflussmesswert (d) repräsentierenden Ausgangswert (a) ausgibt, wobei eine Niedrigdurchflussabschaltung (LFC) aktiviert ist, wobei bei aktivierter Niedrigdurchflussabschaltung (LFC) der Ausgangswert (a) auf Null gesetzt wird, insbesondere nach einem der Ansprüche 1 bis 4,
**gekennzeichnet durch** die folgenden Verfahrensschritte:
• Bestimmung (101) von Durchflussmesswerten (d)
• Bildung (102) von geglätteten Durchflussmesswerten (d_{g}) über jeweils eine Mehrzahl (m) von Durchflussmesswerten (d)
• Deaktivierung (104) der Niedrigdurchflussabschaltung (LFC), wobei bei deaktivierter Niedrigdurchflussabschaltung (LFC) ein dem tatsächlichen Durchflussmesswert (d) entsprechender Ausgangswert (a) ausgegeben wird, wenn eine der beiden folgenden Bedingungen erfüllt ist:
Der geglättete Durchflussmesswert (d_{g}) liegt oberhalb eines zweiten vorgegebenen Grenzwertes (g₂) (104'), oder
ein aktuell bestimmter Durchflussmesswert (dₐₖₜ) liegt oberhalb eines dritten vorgegebenen Grenzwertes (g₃) (104").

6. Verfahren (100) nach Anspruch 5, **dadurch gekennzeichnet, dass** der zweite vorgegebene Grenzwert (g₂) gebildet wird aus dem Niedrigdurchflussgrenzwert (gₙ) plus dem ersten Toleranzwert (t₁).

7. Verfahren (100) nach Anspruch 5, **dadurch gekennzeichnet, dass** der dritte vorgegebene Grenzwert (g₃) gebildet wird aus dem Niedrigdurchflussgrenzwert (gₙ) plus einem zweiten Toleranzwert (t₂).

8. Verfahren nach einem der Ansprüche 1 bis 7, **dadurch gekennzeichnet, dass** in einem Korrekturschritt (108) bei aktivierter Niedrigdurchflussabschaltung (LFC) eine Nullpunktskorrektur des Durchflussmessgerätes (1) durchgeführt wird.

9. Verfahren (100) nach einem der Ansprüche 1 bis 8, **dadurch gekennzeichnet, dass** folgende zusätzliche Verfahrensschritte durchgeführt werden:
• Bestimmung oder Abrufung (105) der Reaktionszeit (t) der Niedrigdurchflussabschaltung (LFC)
• Bestimmung (106) des Durchflusses (dₜ) nach Deaktivierung der Niedrigdurchflussabschaltung (LFC) über den Zeitraum der Reaktionszeit (t) der Niedrigdurchflussabschaltung (LFC)
• Aufaddieren (107) des über den Zeitraum der Reaktionszeit (t) bestimmten Durchflusses (dₜ) auf den Ausgangswert (a).

10. Verfahren nach Anspruch 9, **dadurch gekennzeichnet, dass** der über den Zeitraum der Reaktionszeit (t) bestimmte Durchfluss (dₜ) in eine Mehrzahl (t) von Durchflussteilmengen (Δd) unterteilt wird und auf mehrere Ausgangswerte (a) aufgeteilt aufaddiert wird.

11. Durchflussmessgerät (1) zur Bestimmung eines Durchflusses eines Mediums, mit einen Sensor (2) zur Erfassung einer den Durchfluss angebenden Messgröße (p), wobei der Sensor (2) die Messgröße (p) in ein Sensorsignal (s) umformt, und wobei das Durchflussmessgerät (1) eine Steuer- und Auswerteeinheit (3) aufweist, wobei die Steuer- und Auswerteeinheit (3) aus dem Sensorsignal (s) einen Durchflussmesswert (d) für den Durchfluss bestimmt und einen den Durchflussmesswert (d) repräsentierenden Ausgangswert (a) ausgibt,
**dadurch gekennzeichnet,**
**dass** die Steuer- und Auswerteeinheit (3) derart ausgestaltet ist, dass sie im Betriebszustand des Durchflussmessgerätes (1) die folgenden Verfahrensschritte ausführt:
• Bestimmung (101) von Durchflussmesswerten (d)
• Bildung (102) von geglätteten Durchflussmesswerten (d_{g}) über jeweils eine Mehrzahl (m) von Durchflussmesswerten (d)
• Aktivieren einer Niedrigdurchflussabschaltung (LFC), wobei bei aktivierter Niedrigdurchflussabschaltung (LFC) der Ausgangswert (a) auf Null gesetzt wird, wenn beide der folgenden Bedingungen erfüllt sind:
Der aktuelle geglättete Durchflussmesswert (d_{g,akt}) liegt unterhalb eines ersten vorgegebenen Grenzwertes (g₁)
und
eine vorgegebene Anzahl (n) Durchflussmesswerte (d) ist mit deaktivierter Niedrigdurchflussabschaltung (LFC) bestimmt worden (103) oder eine vorgegebene Anzahl (k) geglätteter Durchflussmesswerte (d_{g}) ist mit deaktivierter Niedrigdurchflussabschaltung (LFC) gebildet worden (103').

12. Durchflussmessgerät (1) zur Bestimmung eines Durchflusses eines Mediums, mit einen Sensor (2) zur Erfassung einer den Durchfluss angebenden Messgröße (p), wobei der Sensor (2) die Messgröße (p) in ein Sensorsignal (s) umformt, und wobei das Durchflussmessgerät (1) eine Steuer- und Auswerteeinheit (3) aufweist, wobei die Steuer- und Auswerteeinheit (3) aus dem Sensorsignal (s) einen Durchflussmesswert (d) für den Durchfluss bestimmt und einen den Durchflussmesswert (d) repräsentierenden Ausgangswert (a) ausgibt, insbesondere nach Anspruch 11,
**dadurch gekennzeichnet,**
**dass** die Steuer- und Auswerteeinheit (3) derart ausgestaltet ist, dass sie im Betriebszustand des Durchflussmessgerätes (1) die folgenden Verfahrensschritte ausführt, wenn eine Niedrigdurchflussabschaltung (LFC) aktiviert ist, wobei bei aktivierter Niedrigdurchflussabschaltung (LFC) der Ausgangswert (a) auf Null gesetzt wird:
• Bestimmung (101) von Durchflussmesswerten (d)
• Bildung (102) von geglätteten Durchflussmesswerten (d_{g}) über jeweils eine Mehrzahl (m) von Durchflussmesswerten (d)
• Deaktivierung der Niedrigdurchflussabschaltung (LFC), wobei bei deaktivierter Niedrigdurchflussabschaltung (LFC) ein dem tatsächlichen Durchflussmesswert (d) entsprechender Ausgangswert (a) ausgegeben wird, wenn eine der beiden folgenden Bedingungen erfüllt ist:
Der geglättete Durchflussmesswert (d_{g}) liegt oberhalb eines zweiten vorgegebenen Grenzwertes (g₂), oder
ein aktuell bestimmter Durchflussmesswert (dₐₖₜ) liegt oberhalb eines dritten vorgegebenen Grenzwertes (g₃).

13. Durchflussmessgerät (1) nach Anspruch 11 oder 12, **dadurch gekennzeichnet, dass** die Steuer- und Auswerteeinheit (3) ferner derart ausgestaltet ist, dass sie im Betriebszustand des Durchflussmessgerätes (1) wenigstens einen der Verfahrensschritte gemäß den Patentansprüchen 2 bis 4 und/oder 6 bis 10 durchführt.

## Claims

1. Method (100) for operating a flowmeter (1), wherein the flowmeter (1) has a sensor (2) for capturing a measured variable (p) indicating the flow, wherein the sensor (2) converts the measured variable (p) into a sensor signal (s) and wherein the flowmeter (1) has a control and evaluation unit (3), wherein the control and evaluation unit (3) determines a flow measurement value (d) for the flow from the sensor signal (s) and outputs an output value (a) representing the flow measurement value (d),
having the following process steps:
• determining (101) flow measurement values (d)
• forming (102) smoothed flow measurement values (d_{g}) over a plurality (m) of flow measurement values (d), respectively
**characterized by** the following method step:
• activating a low flow cut-off (LFC), wherein when the low flow cut-off (LFC) is activated, the output value (a) is set to zero if both of the following conditions are met:
the current smoothed flow measurement value (d_{g,akt}) is below a first predetermined limit value (g₁)
and
a predetermined number (n) of flow measurement values (d) has been determined (103) with deactivated low flow cut-off (LFC) or a predetermined number (k) of smoothed flow measurement values (d_{g}) has been formed (103') with deactivated low flow cut-off (LFC).

2. Method (100) according to claim 1, **characterized in that** the smoothed flow measurement value (d_{g}) is formed by forming a mean value, in particular wherein a simple moving average, an exponential moving average or a weighted moving average is formed or an arithmetic or harmonic mean value is formed.

3. Method (100) according to claim 2, **characterized in that** the predetermined number (k) of smoothed flow measurement values (d_{g}) corresponds at least to the plurality (m) of flow measurement values (d) over which smoothing is performed per smoothed flow measurement value (d_{g}).

4. Method (100) according to any one of claims 1 to 3, **characterized in that** the first predetermined limit value (g₁) is formed by a low flow limit value (gₙ) minus a first tolerance value (t₁).

5. Method (100) for operating a flowmeter (1), wherein the flowmeter (1) has a sensor (2) for capturing a measured variable (p) indicating the flow, wherein the sensor (2) converts the measured variable (p) into a sensor signal (s), and wherein the flowmeter (1) has a control and evaluation unit (3), wherein the control and evaluation unit (3) determines a flow measurement value (d) for the flow from the sensor signal (s) and outputs an output value (a) representing the flow measurement value (d), wherein a low flow cut-off (LFC) is activated, wherein the output value (a) is set to zero when the low flow cut-off (LFC) is activated, in particular according to any one of claims 1 to 4,
**characterized by** the following method steps:
• determining (101) flow measurement values (d)
• forming (102) smoothed flow measurement values (d_{g}) over a plurality (m) of flow measurement values (d) in each case
• deactivating (104) the low flow cut-off (LFC), wherein when the low flow cut-off (LFC) is deactivated, an output value (a) corresponding to the current flow measurement value (d) is output when either of the following two conditions is satisfied:
The smoothed flow measurement value (d_{g}) is above a second predetermined limit value (g₂) (104'), or
a current determined flow measurement value (dₐₖₜ) is above a third predetermined limit value (g₃) (104").

6. Method (100) according to claim 5, **characterized in that** the second predetermined limit value (g₂) is formed from the low flow limit value (gₙ) plus the first tolerance value (t₁).

7. Method (100) according to claim 5, **characterized in that** the third predetermined limit value (g₃) is formed from the low flow limit value (gₙ) plus a second tolerance value (t₂).

8. Method according to any one of claims 1 to 7, **characterized in that**, in a correction step (108), a zero point correction of the flowmeter (1) is carried out when the low flow cut-off (LFC) is activated.

9. Method (100) according to any one of claims 1 to 8, **characterized in that** the following additional method steps are carried out:
• determining or retrieving (105) the reaction time (t) of the low flow cut-off (LFC).
• determining (106) the flow rate (dt) after deactivation of the low flow cut-off (LFC) over the period of the reaction time (t) of the low flow cut-off (LFC)
• adding (107) the flow rate (dₜ) determined over the period of the reaction time (t) to the initial value (a).

10. Method according to claim 9, **characterized in that** the flow rate (dₜ) determined over the period of the reaction time (t) is divided into a plurality (t) of flow rate subsets (Δd) and added up divided to a plurality of output values (a).

11. Flowmeter (1) for determining a flow rate of a medium, having a sensor (2) for detecting a measured variable (p) indicating the flow rate, wherein the sensor (2) converts the measured variable (p) into a sensor signal (s), wherein and the flowmeter (1) has a control and evaluation unit (3), wherein the control and evaluation unit (3) determines a flow measurement value (d) for the flow rate from the sensor signal (s) and outputs an output value (a) representing the flow measurement value (d),
**characterized in**
**that** the control and evaluation unit (3) is designed in such a way that it carries out the following method steps in the operating state of the flowmeter (1):
• determining (101) flow measurement values (d)
• forming (102) smoothed flow measurement values (d_{g}) over a plurality (m) of flow measurement values (d) in each case
• activating a low flow cut-off (LFC), wherein when the low flow cut-off (LFC) is activated, the output value (a) is set to zero if both of the following conditions are met:
the current smoothed flow measurement value (d_{g,akt}) is below a first predetermined limit value (g₁)
and
a predetermined number (n) of flow measurement values (d) has been determined (103) with deactivated low flow cut-off (LFC) or a predetermined number (k) of smoothed flow measurement values (d_{g}) has been formed (103') with deactivated low flow cut-off (LFC).

12. Flowmeter (1) for determining a flow rate of a medium, having a sensor (2) for capturing a measured variable (p) indicating the flow, wherein the sensor (2) converts the measured variable (p) into a sensor signal (s), and wherein the flowmeter (1) has a control and evaluation unit (3), wherein the control and evaluation unit (3) determines a flow measurement value (d) for the flow from the sensor signal (s) and outputs an output value (a) representing the flow measurement value (d), in particular according to claim 11,
**characterized in**
**that** the control and evaluation unit (3) is designed in such a way that, in the operating state of the flowmeter (1), it carries out the following method steps when a low flow cut-off (LFC) is activated, wherein the output value (a) is set to zero when the low flow cut-off (LFC) is activated:
• determining (101) of flow measurement values (d).
• forming (102) smoothed flow measurement values (d_{g}) over a plurality (m) of flow measurement values (d) in each case
• deactivating the low flow cut-off (LFC), wherein when the low flow cut-off (LFC) is deactivated, an output value (a) corresponding to the current flow measurement value (d) is output when one of the following two conditions is met:
the smoothed flow measurement value (d_{g}) is above a second predetermined limit value (g₂), or
a currently determined flow measurement value (dₐₖₜ) is above a third predetermined limit value (g₃).

13. Flowmeter (1) according to claim 11 or 12, **characterized in that** the control and evaluation unit (3) is further designed in such a way that it carries out at least one of the method steps according to claims 2 to 4 and/or 6 to 10 in the operating state of the flowmeter (1).

## Revendications

1. Procédé (100) pour faire fonctionner un débitmètre (1), le débitmètre (1) possédant un capteur (2) destiné à acquérir une grandeur de mesure (p) indiquant le débit, le capteur (2) transformant la grandeur de mesure (p) en un signal de capteur (s), et le débitmètre (1) possédant une unité de commande et d'évaluation (3), l'unité de commande et d'évaluation (3) déterminant, à partir du signal de capteur (s), une valeur de mesure de débit (d) pour le débit et délivrant une valeur de sortie (a) représentant la valeur de mesure de débit (d), comprenant les étapes de traitement suivantes :
• détermination (101) de valeurs de mesure de débit (d)
• formation (102) de valeurs de mesure de débit lissées (d_{g}) respectivement sur une pluralité (m) de valeurs de mesure de débit (d),
**caractérisé par** l'étape de procédé suivante :
• activation d'une coupure sur débit faible (LFC), la valeur initiale (a) étant mise à zéro lorsque la coupure sur débit faible (LFC) est activée et que les deux conditions suivantes sont remplies :
la valeur de mesure de débit lissée actuelle (d_{g,akt}) est inférieure à une première valeur limite (g₁) prédéfinie
et
un nombre prédéfini (n) de valeurs de mesure de débit (d) a été déterminé (103) avec la coupure sur débit faible (LFC) désactivée ou un nombre prédéfini (k) de valeurs de mesure de débit lissées (d_{g}) a été formé (103') avec la coupure sur débit faible (LFC) désactivée.

2. Procédé (100) selon la revendication 1, **caractérisé en ce que** la valeur de mesure de débit lissée (d_{g}) est formée par la formation d'une valeur moyenne, en particulier en formant une moyenne mobile simple, une moyenne mobile exponentielle ou une moyenne mobile pondérée, ou en formant une moyenne arithmétique ou harmonique.

3. Procédé (100) selon la revendication 2, **caractérisé en ce que** le nombre prédéfini (k) de valeurs de mesure de débit lissées (d_{g}) correspond au moins à la pluralité (m) des valeurs de mesure de débit (d) sur lesquelles le lissage est effectué par valeur de mesure de débit lissée (d_{g}).

4. Procédé (100) selon l'une des revendications 1 à 3, **caractérisé en ce que** la première valeur limite (g₁) prédéfinie est formée par une valeur limite de débit faible (gₙ) moins une première valeur de tolérance (t₁).

5. Procédé (100) pour faire fonctionner un débitmètre (1), le débitmètre (1) possédant un capteur (2) destiné à acquérir une grandeur de mesure (p) indiquant le débit, le capteur (2) transformant la grandeur de mesure (p) en un signal de capteur (s), et le débitmètre (1) possédant une unité de commande et d'évaluation (3), l'unité de commande et d'évaluation (3) déterminant, à partir du signal de capteur (s), une valeur de mesure de débit (d) pour le débit et délivrant une valeur de sortie (a) représentant la valeur de mesure de débit (d), une coupure sur débit faible (LFC) étant activée, la valeur de sortie (a) étant mise à zéro lorsque la coupure sur débit faible (LFC) est activée, notamment selon l'une des revendications 1 à 4,
**caractérisé par** les étapes de procédé suivantes :
• détermination (101) de valeurs de mesure de débit (d)
• formation (102) de valeurs de mesure de débit lissées (d_{g}) respectivement sur une pluralité (m) de valeurs de mesure de débit (d),
• désactivation (104) de la coupure sur débit faible (LFC), une valeur de sortie (a) correspondant à la valeur de mesure de débit (d) effective étant délivrée en sortie lorsque la coupure sur débit faible (LFC) est désactivée et que l'une des deux conditions suivantes est remplie :
la valeur de mesure de débit lissé (d_{g}) est supérieure à une deuxième valeur limite (g₂) prédéfinie (104'), ou
une valeur de mesure de débit actuelle (dₐₖₜ) déterminée est supérieure à une troisième valeur limite (g₃) prédéfinie (104").

6. Procédé (100) selon la revendication 5, **caractérisé en ce que** la deuxième valeur limite (g₂) prédéfinie est formée à partir de la valeur limite de débit faible (gₙ) plus la première valeur de tolérance (t₁).

7. Procédé (100) selon la revendication 5, **caractérisé en ce que** la troisième valeur limite (g₃) prédéfinie est formée à partir de la valeur limite de débit faible (gₙ) pus une deuxième valeur de tolérance (t₂).

8. Procédé selon l'une des revendications 1 à 7, **caractérisé en ce que**, dans une étape de correction (108) avec la coupure sur débit faible (LFC) activée, une correction du point zéro du débitmètre (1) est effectuée.

9. Procédé (100) selon l'une des revendications 1 à 8, **caractérisé en ce que** les étapes de procédé supplémentaires suivantes sont exécutées :
• détermination ou consultation (105) du temps de réaction (t) de la coupure sur débit faible (LFC)
• détermination (106) du débit (dₜ) après désactivation de la coupure sur débit faible (LFC) pendant la période du temps de réaction (t) de la coupure sur débit faible (LFC)
• addition (107) du débit (dₜ) déterminé pendant la période du temps de réaction (t) à la valeur de sortie (a).

10. Procédé selon la revendication 9, **caractérisé en ce que** le débit (dₜ) déterminé pendant la période du temps de réaction (t) est divisé en une pluralité (t) de quantités partielles de débit (Δd) et additionné fractionné à plusieurs valeurs de sortie (a).

11. Débitmètre (1) destiné à déterminer un débit d'un fluide, comprenant un capteur (2) destiné à acquérir une grandeur de mesure (p) indiquant le débit, le capteur (2) transformant la grandeur de mesure (p) en un signal de capteur (s), et le débitmètre (1) possédant une unité de commande et d'évaluation (3), l'unité de commande et d'évaluation (3) déterminant, à partir du signal de capteur (s), une valeur de mesure de débit (d) pour le débit et délivrant une valeur de sortie (a) représentant la valeur de mesure de débit (d),
**caractérisé en ce**
**que** l'unité de commande et d'évaluation (3) est conçue de telle sorte qu'elle exécute les étapes suivantes lorsque le débitmètre (1) est en état opérationnel :
• détermination (101) de valeurs de mesure de débit (d)
• formation (102) de valeurs de mesure de débit lissées (d_{g}) respectivement sur une pluralité (m) de valeurs de mesure de débit (d),
• activation d'une coupure sur débit faible (LFC), la valeur initiale (a) étant mise à zéro lorsque la coupure sur débit faible (LFC) est activée et que les deux conditions suivantes sont remplies :
la valeur de mesure de débit lissée actuelle (d_{g,akt}) est inférieure à une première valeur limite (g₁) prédéfinie et
un nombre prédéfini (n) de valeurs de mesure de débit (d) a été déterminé (103) avec la coupure sur débit faible (LFC) désactivée ou un nombre prédéfini (k) de valeurs de mesure de débit lissées (d_{g}) a été formé (103') avec la coupure sur débit faible (LFC) désactivée.

12. Débitmètre (1) destiné à déterminer un débit d'un fluide, comprenant un capteur (2) destiné à acquérir une grandeur de mesure (p) indiquant le débit, le capteur (2) transformant la grandeur de mesure (p) en un signal de capteur (s), et le débitmètre (1) possédant une unité de commande et d'évaluation (3), l'unité de commande et d'évaluation (3) déterminant, à partir du signal de capteur (s), une valeur de mesure de débit (d) pour le débit et délivrant une valeur de sortie (a) représentant la valeur de mesure de débit (d), notamment selon la revendication 11,
**caractérisé en ce**
**que** l'unité de commande et d'évaluation (3) est conçue de telle sorte qu'elle exécute les étapes suivantes lorsque le débitmètre (1) est en état opérationnel, lorsqu'une coupure sur débit faible (LFC) est activée, la valeur de sortie (a) étant mise à zéro lorsque la coupure sur débit faible (LFC) est activée :
• détermination (101) de valeurs de mesure de débit (d)
• formation (102) de valeurs de mesure de débit lissées (d_{g}) respectivement sur une pluralité (m) de valeurs de mesure de débit (d),
• désactivation de la coupure sur débit faible (LFC), une valeur de sortie (a) correspondant à la valeur de mesure de débit (d) effective étant délivrée en sortie lorsque la coupure sur débit faible (LFC) est désactivée et que l'une des deux conditions suivantes est remplie :
la valeur de mesure de débit lissé (d_{g}) est supérieure à une deuxième valeur limite (g₂) prédéfinie, ou
une valeur de mesure de débit actuelle (dₐₖₜ) déterminée est supérieure à une troisième valeur limite (g₃) prédéfinie.

13. Débitmètre (1) selon les revendications 11 ou 12, **caractérisé en ce que** l'unité de commande et d'évaluation (3) est en outre conçue de telle sorte qu'elle exécute, lorsque le débitmètre (1) est en état opérationnel, au moins l'une des étapes de procédé selon les revendications 2 à 4 et/ou 6 à 10.
